## Europäisches Patentamt

## European Patent Office

## Office européen des brevets

(11) Veröffentlichungsnummer: **0 246 424 B1**

(12) # EUROPÄISCHE PATENTSCHRIFT

(45) Veröffentlichungstag der Patentschrift:
22.08.90

(51) Int. Cl.⁵: **F16C 33/10**

(21) Anmeldenummer: 87104416.0

(22) Anmeldetag: 25.03.87

(54) Axialgleitlager für eine Anlaufschulter einer Getriebewelle.

(30) Priorität: 21.05.86 DE 3617087

(43) Veröffentlichungstag der Anmeldung:
25.11.87 Patentblatt 87/48

(45) Bekanntmachung des Hinweises auf die Patenterteilung:
22.08.90 Patentblatt 90/34

(84) Benannte Vertragsstaaten:
BE DE FR GB IT NL SE

(56) Entgegenhaltungen:
DE-A- 2 413 020
DE-A- 2 639 735
DE-A- 2 728 249
FR-A- 2 032 998
GB-A- 2 138 514
US-A- 2 362 667
US-A- 3 377 113
US-A- 3 597 027

(73) Patentinhaber: FORD-WERKE AKTIENGESELLSCHAFT,
Werk Köln-Niehl Henry-Ford-Strasse Postfach 60 40 02,
D-5000 Köln 60(DE)
(84) Benannte Vertragsstaaten: BE DE IT NL SE

(73) Patentinhaber: FORD MOTOR COMPANY LIMITED,
Eagle Way, Brentwood Essex CM13 3BW(GB)
(84) Benannte Vertragsstaaten: GB

(73) Patentinhaber: FORD FRANCE SOCIETE ANONYME,
344 Avenue Napoléon Bonaparte B.P. 307, F-92506 Rueil
Malmaison Cedex(FR)
(84) Benannte Vertragsstaaten: FR

(72) Erfinder: Premiski, Vladimir, Fliederstrasse 23,
D-5358 BAM-Willerscheid(DE)
Erfinder: Premiski, Claudia, Fliederstrasse 23,
D-5358 BAM-Willerscheid(DE)

(74) Vertreter: Ritzkowsky, Harald, Dipl.-Ing., Ford-Werke
Aktiengesellschaft Patentabteilung NH/DRP
Henry-Ford-Strasse, D-5000 Köln 60(DE)

ACTORUM AG

## Beschreibung

Die Erfindung bezieht sich auf ein Axialgleitlager für eine Anlaufschulter einer Getriebewelle, der im Oberbegriff des Patentanspruchs 1 erläuterten Art.

Aus der US-A 3 377 113 ist bereits ein Axialgleitlager für eine Anlaufschulter einer Getriebewelle bekannt, bei dem die bogenförmigen Schmierölnuten einen Anfangsabschnitt aufweisen, der etwa in Richtung der Resultierenden der auf ein im Schmieröl mitgeführtes Partikel einwirkenden Tangential- und Zentrifugalkräfte liegt.

Das bekannte Axialgleitlager weist den Nachteil auf, daß auch der Endabschnitt der Schmierölnuten etwa in der gleichen Richtung liegt und das dementsprechend ein im Schmieröl mitgeführtes Partikel bestrebt ist, sich noch weiter in Richtung dieser Resultierenden zu bewegen. Dabei kann es in unerwünschter Weise zwischen die glatten Gleitflächen gedrängt werden.

Die Aufgabe der Erfindung ist es, ein Axialgleitlager der im Oberbegriff des Patentanspruchs 1 genannten Art derart zu verbessern, daß im Schmieröl mitgeführte Partikel, wie Abrieb und Späne, und zwar nicht nur von Eisenmetallen sondern insbesondere auch von Nichteisenmetallen, sicher aus dem Bereich der wirksamen glatten Lagerflächen ferngehalten wird.

Gemäß der Erfindung wird diese Aufgabe gelöst, indem ein Axialgleitlager der im Oberbegriff des Patentanspruchs 1 erläuterten Art das im Kennzeichenteil des Patentanspruchs 1 aufgezeigte Merkmal aufweist.

Dadurch, daß die Schmierölnuten einen Endabschnitt aufweisen, der etwas radial nach einwärts verläuft, wird ein sich im Schmieröl in Richtung der Resultierenden der Tangential- und Zentrifugalkräfte mitbewegendes Partikel in einen Endabschnitt der Schmierölnuten übergeführt, indem es unter den auf es einwirkenden Kräften in Anlage an den senkrechten Wanderungen der Schmierölnuten festgehalten und an weiteren Wanderungen gehindert wird.

In den Ansprüchen 2 und 3 sind zweckmäßige Maßnahmen zum Herstellen der erfindungsgemäßen Schmierölnuten erläutert.

Die Erfindung wird anhand eines in der beiliegenden Zeichnungen gezeigten Ausführungsbeispiels näher erläutert.

Es zeigt

Fig. 1 eine Draufsicht auf ein Axialgleitlager für eine Anlaufschulter einer Getriebewelle gemäß der Erfindung;

Fig. 2 einen vertikalen Schnitt entlang der Linie II-II in Fig. 1;

Fig. 3 einen Schnitt entlang der Linie III-III in Fig. 1 und

Fig. 4 einen ähnlichen Schnitt wie Fig. 3 durch eine weitere Ausführungsform.

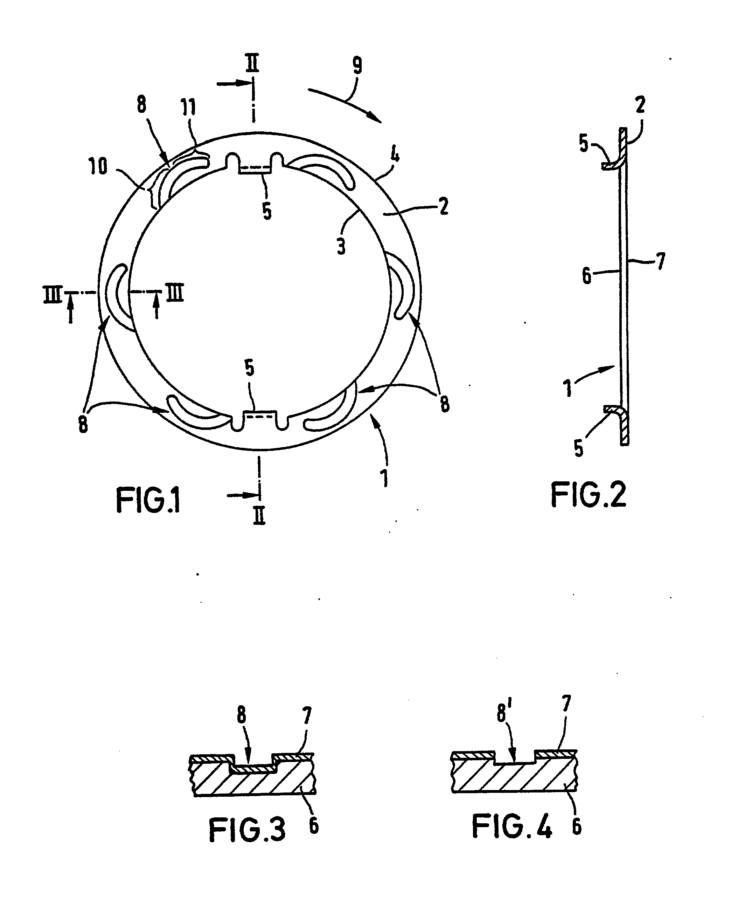

Das in den Fig. 1 und 2 gezeigte Axialgleitlager 1 ist für eine Anlaufschulter einer Getriebewelle vorgesehen und weist dementsprechend eine ringförmige Lagerfläche 2 auf. Das Axialgleitlager 1 wird hierbei über am inneren Umfang 3 oder auch am äußeren Umfang 4 vorgesehene axial abgebogene Zungen 5 an dem die Axiallast aufnehmenden Bauteil gegen Drehung festgelegt.

Das Axialgleitlager 1 kann hierbei in an sich bekannter Weise vollständig aus einem Gleitlagermaterial wie z. B. Bronze bestehen oder aber vorzugsweise, wie in den Zeichnungen gezeigt, aus einem Trägermaterial 6, wie z. B. Stahlblech mit einer aufplattierten Schicht aus Lagermaterial 7, wie z. B. Bronze, hergestellt sein.

Gemäß der Erfindung sind in der ringförmigen Lagerfläche 2 eine Vielzahl von Schmierölnuten 8 vorgesehen, die entgegen der Drehrichtung der Getriebewelle, die durch den Pfeil 9 angedeutet ist, offen sind und bogenförmig und mit rechteckigem Querschnitt zu ihrem geschlossenen Ende verlaufen.

Gemäß der Erfindung weisen die bogenförmigen Schmierölnuten 8 jedoch einen Anfangsabschnitt 10 auf, der etwa in Richtung der Resultierenden der auf ein im Schmieröl mitgeführtes Partikel einwirkenden Tagential- und Zentrifugalkräfte liegt und weisen einen Endabschnitt 11 auf, der etwas radial nach einwärts verläuft.

Dadurch werden im Schmieröl mitgeführte Partikel, wie von der Fertigung zurückgebliebene Späne oder durch Verschleiß bedingter Abrieb, infolge ihres höheren Beharrungsvermögens nach außen getrieben, wo sie die Anfangsabschnitte 10 der Schmierölnuten 8 abfangen und in die Endabschnitte 11 weiterführen, wo sie sich an der Wandung der Schmierölnuten 8 infolge der einwirkenden Fliehkraft ansammeln und gegenseitig verkeilen. Das gleichfalls in die Schmierölnuten 8 hineingedrängte Schmieröl kann über den Spalt des Axialgleitlagers auf die Lagerfläche 2 gelangen.

In Fig. 3 ist eine Ausführungsform einer erfindungsgemäßen Schmierölnut im Querschnitt gezeigt, die durch Feinprägen hergestellt wird. Dabei muß darauf geachtet werden, daß bei einer Tiefe von etwa einem halben Millimeter möglichst senkrechte Wandungen der Schmierölnut 8 erzielt werden.

Bei der in Fig. 4 gezeigten Schmierölnut 8' ist diese durch Materialabtragen mittels eines Fingerfräsers hergestellt, was zwar teurer ist aber mit größerer Sicherheit eine rechtwinklige Wandung der Schmierölnut einzuhalten erlaubt und eventuell sogar eine hinterschnittene Form der Schmierölnutwandung ermöglicht.

## Patentansprüche

1. Axialgleitlager für eine Anlaufschulter einer Getriebewelle mit einer Vielzahl von in der Lagerfläche angeordneten, entgegen der Drehrichtung offenen, bogenförmigen Schmierölnuten (8) mit rechteckigem Querschnitt und geschlossenen Enden, die einen Anfangsabschnitt (10) aufweisen, der etwa in Richtung der Resultierenden der auf ein im Schmieröl mitgeführtes Partikel einwirkenden Tangential- und Zentrifugalkräfte liegt, dadurch gekennzeichnet, daß die Schmierölnuten (8) einen Endabschnitt (11) aufweisen, der etwas radial nach einwärts verläuft.

2. Axialgleitlager nach Anspruch 1, dadurch gekennzeichnet, daß die bogenförmigen Schmierölnuten (8) durch Feinprägen hergestellt sind.

3. Axialgleitlager nach Anspruch 1, dadurch gekennzeichnet, daß die bogenförmigen Schmierölnuten (8') durch Materialabtragen durch einen Fingerfräser hergestellt sind.

## Claims

1. An axial sliding bearing for a butting shoulder of a transmission shaft, having a plurality of curved lubricating-oil grooves (8) which are formed in the bearing surface and are open contrary to the direction of rotation and which have a rectangular cross-section and closed ends which have an initial portion (10) situated approximately in the direction of the resultant of the tangential and centrifugal forces acting upon a particle conveyed in the lubricating oil, characterized in that the lubricating-oil grooves (8) have an end portion (11) which extends approximately radially inwards.

2. An axial sliding bearing according to Claim 1, characterized in that the curved lubricating-oil grooves (8) are produced by precision-stamping.

3. An axial sliding bearing according to Claim 1, characterized in that the curved lubricating-oil grooves (8') are produced by the removal of material by an end-milling cutter.

## Revendications

1. Palier lisse axial pour un épaulement de butée d'un arbre d'entraînement comportant une pluralité de rainures de lubrification (8) en arc, disposées dans la surface du palier, ouvertes dans le sens contraire au sens de rotation, présentant une section transversale rectangulaire et des extrémités fermées ainsi qu'une portion initiale (10) qui se situe à peu près dans la direction de la résultante des forces tangentielles et centrifuges agissant sur une particule entraînée dans l'huile de lubrification, caractérisé en ce que les rainures de lubrification (8) comportent une portion terminale (11) qui s'étend légèrement dans le sens radial vers l'intérieur.

2. Palier lisse axial selon la revendication 1, caractérisé en ce que les rainures de lubrification (8) en arc sont réalisées par estampage de précision.

3. Palier lisse axial selon la revendication 1, caractérisé en ce que les rainures de lubrification (8') en arc sont réalisées par enlèvement de matière au moyen d'une fraise à queue.

FIG.1

FIG.2

FIG.3

FIG.4